# EUROPEAN PATENT SPECIFICATION

(11) **EP 4 005 390 B1**
(45) Date of publication and mention of the grant of the patent: **01.04.2026**
(21) Application number: 21209481.7
(22) Date of filing: 22.11.2021
(51) Int. Cl.: A21C 9/04, A21C 15/00

(54) **PIZZA PRODUCTION LINE AND METHOD FOR SPREADING A SAUCE**
PIZZAHERSTELLUNGSLINIE UND VERFAHREN VERTEILEN VON SAUCE AUF LEBENSMITTELPRODUKTEN
LIGNE DE PRODUCTION DE PIZZA ET PROCÉDÉ D'ÉTALEMENT DE SAUCE SUR DES PRODUITS ALIMENTAIRES

(30) Priority: 25.11.2020 IT 202000028343
(43) Date of publication of application: 01.06.2022
(73) Proprietor: Italpizza S.p.A., 41126 Modena (IT)
(72) Inventor: CIONI, Alessandro, 41043 MODENA (IT)
(74) Representative: Monelli, Alberto

(56) References cited:
- WO-A1-2015/026896
- FR-A1- 2 778 828
- GB-A- 1 022 233
- JP-B2- 4 297 028
- US-A- 6 051 070

## Description

The present invention relates to a pizza production line and a method for spreading a sauce.

As is known, the production of a pizza at industrial level envisages a step of spreading sauces, e.g. tomato sauce, on the plurality of previously formed doughs. Historically, this step was entrusted to operators who used to spread the sauce with a brush by hand. Recently, the trend of the sector has been that of developing solutions that enable the automation of this process.

Solutions of the known type in this context envisage discs of pizza being supplied in succession with a portion of sauce onto each of them at a spreading tool of the rigid type, for example a disc.

In a first known solution, the spreading tool rotates about an axis of rotation normal to the disc for spreading the sauce thereon in a uniform way.

In a second known solution, the spreading tool is moved so as to follow a substantially spiral shaped course on the disc of pizza.

Such known solutions are particularly adapted to spread the sauce onto a raw dough, i.e. before it is cooked. In fact, the raw doughs have a rectangular shape and the surface onto which the sauce is spread does not tend to have any irregularities.

On the contrary, such known solutions cannot be used effectively in production lines in which the sauce is dosed and spread after the doughs have been cooked. In fact, the cooked doughs have various irregularities on the surface which hinder the uniform spreading of the sauce.

Furthermore, the spiral movement of the tool of the second known solution implies a long spreading time, which is translated into a reduction in the hourly production of pizzas.

GB1022233, JP4297028B2 and WO2015/026896 disclose known solutions.

In this context, the technical task underpinning the present invention is that of proposing a pizza production line and method for spreading sauce on food products and a pizza production line, which obviate the drawbacks of the prior art cited above.

It is an object of the present invention to propose a pizza production line and method for spreading sauce on food products, which enable a quick and uniform spreading, at the same time minimising the dripping of sauce between the spreading onto consecutive products.

The defined technical task and the specified aims are substantially achieved by a pizza production line and method for spreading sauce on food products and a pizza production line, comprising the technical characteristics set forth in one or more of the appended claims.

Further characteristics and advantages of the present invention will more fully emerge from the non-limiting description of a preferred but not exclusive embodiment of a pizza production line and method for spreading sauce on food products and a pizza production line, as illustrated in the accompanying drawings, in which:
- figures 1 and 2 schematically illustrate a pizza production line for spreading sauce on food products, according to the present invention, in a view from above and a front view, respectively;
- figure 3 illustrates an embodiment of the spreading head of the spreading apparatus of figure 1, in a front view from below;
- figure 4 illustrates an alternative embodiment of the spreading head of the spreading apparatus of figure 1, in a front view from below;
- figures 5a, 6a and 7a illustrate three different section lines on the spreading head of figure 3;
- figures 5b, 6b and 7b illustrate three side views of the spreading head of figure 3, according to the arrows indicated in figures 5a, 6a and 7a, respectively;

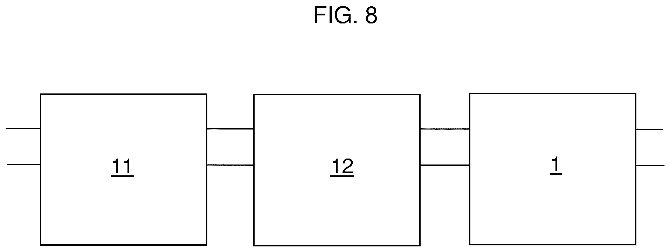

- figure 8 schematically illustrates a pizza production line, according to the present invention.

With reference to the figures, number 1 denotes an apparatus for spreading sauce on food products.

The spreading apparatus 1 comprises a conveyor 2 of a plurality of food products. Preferably, the conveyor 2 is of the belt type.

The spreading apparatus 1 comprises at least one spreading head 3 acting on the conveyor 2 in such a way as to spread the sauce.

The spreading head 3 comprises a plurality of bristles 4 and a support surface 5 destined to face the conveyor 2. The bristles 4 originate from the support surface 5 and move away therefrom. In particular, in an operating condition in which the support surface 5 faces the conveyor 2, the bristles 4 project towards the conveyor 2.

In the embodiment described and illustrated herein, the bristles 4 are grouped into bunches. Therefore, in the text below the term "bristles" shall be used to indicate "bunches of bristles".

Preferably, the bristles 4 are arranged in at least one row. The row of bristles 4 has an extension between a central portion and a perimeter portion of the support surface 5. Preferably, the row of bristles 4 has an extension along the support surface 5 according to an at least partially curvilinear course. More preferably, the row of bristles 4 has an extension along the support surface 5 according to a course defining a concavity.

In the embodiment described and illustrated herein, the bristles 4 are arranged in a plurality of rows. Such rows converge into a common central portion of the support surface 5.

In this case, the course defining a concavity of the rows of bristles 4 is such that, when observing the support surface 5, the rows of bristles 4 form overall a cross shaped course, in particular propeller shaped. The term propeller refers here to an aeronautical or marine propeller.

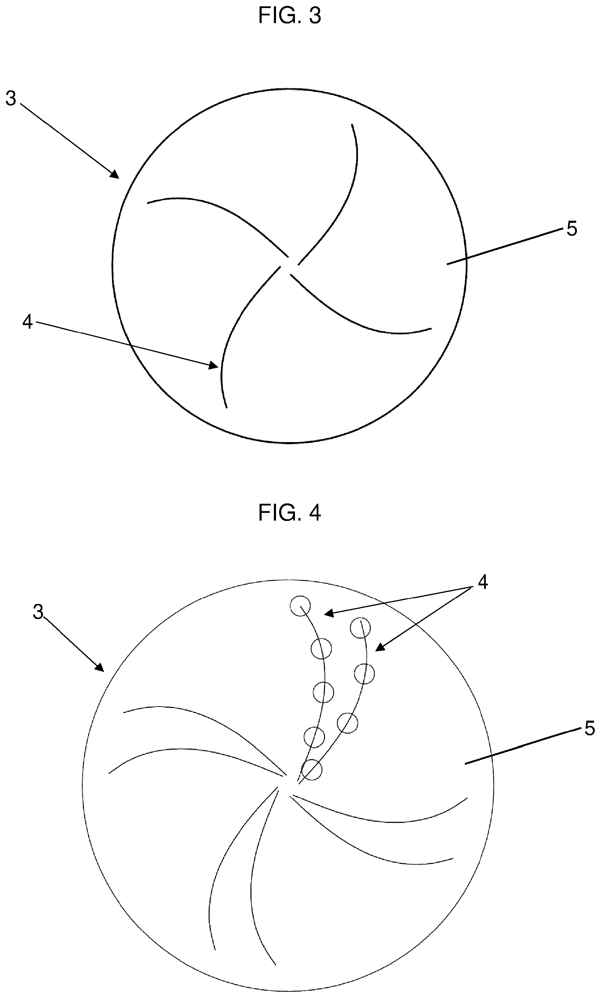

According to the embodiment illustrated in figures 3 and 5-7, there are four rows of bristles 4. Their spatial distribution on the support surface 5 is such that two-by-two they constitute an extension of each other. In other words, the four rows of bristles 4 substantially represent a cross.

According to the embodiment illustrated in figure 4, the rows of bristles 4 extend in pairs. Each pair comprises two adjacent rows of bristles 4. The rows of each pair extend along two flanked trajectories. Preferably, the two adjacent trajectories diverge moving from the centre towards the edge of the support surface 5.

Preferably, the bristles 4 of the pair of rows are arranged so as to define a zig-zag course between the two rows.

Preferably, there are eight rows of bristles 4 and their spatial distribution on the support surface 5 is such that two-by-two they constitute an extension of each other.

Preferably, the spreading head 3 rotates about an axis of rotation. Preferably, the axis of rotation is substantially perpendicular to the conveyor 2. The common central portion of the support surface is at the axis of rotation. The rotation of the spreading head 3 about the axis of rotation is usually comprised between 360° and 500°. The rotation speed can vary as a function of the different sauce viscosities.

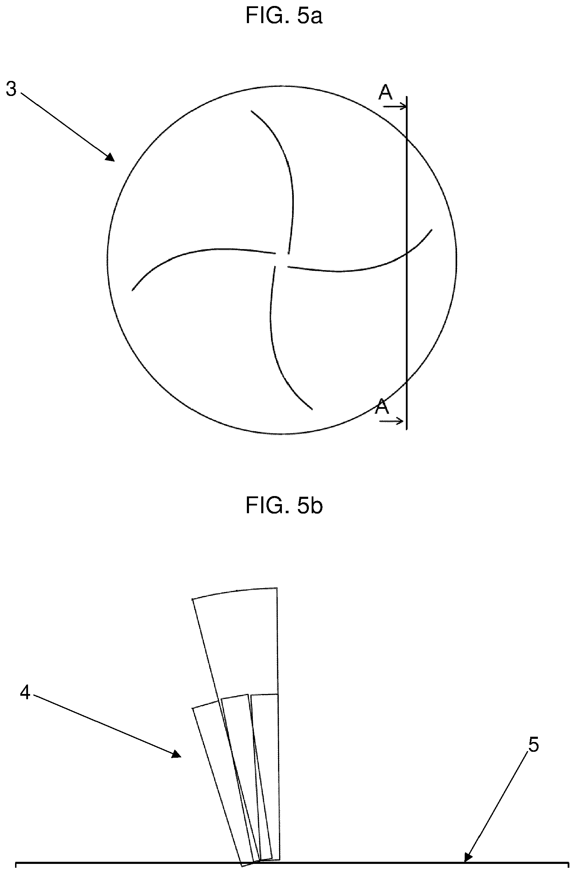

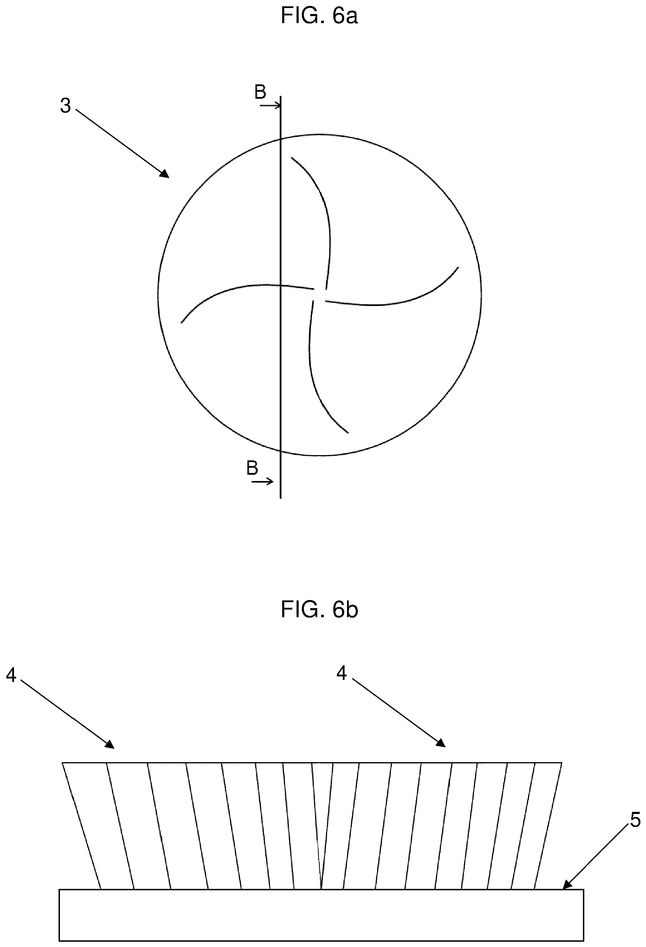

Preferably, as illustrated in figure 5b, the bristles 4 are inclined in a tangential direction with respect to a normal direction to the support surface 5. In other words, if an observer is situated at the perimeter portion of the support surface and observes a row of bristles 4 towards the central portion, he will see bristles 4 inclined on one side. By way of example, if the support surface 5 has a circular shape, the inclination to which reference is made corresponds to an inclination in a tangential or circumferential direction. Preferably, such inclination is comprised in a range of 5°-20°. In the preferred embodiment, such inclination is 15°. Preferably, as illustrated in figure 6b, at least a part of the bristles 4 are inclined towards the outside of the support surface 5. In other words, at least a part of the bristles 4 has a moving-away extension from the support surface 5 which moving-away extension is inclined towards the perimeter portion of the support surface 5. Preferably, such inclination is equal to 15°. By way of example, if the support surface 5 has a circular shape, the inclination towards the outside to which reference is made corresponds to an inclination in a radial direction. This is particularly useful for bringing the sauce from the centre towards the outside.

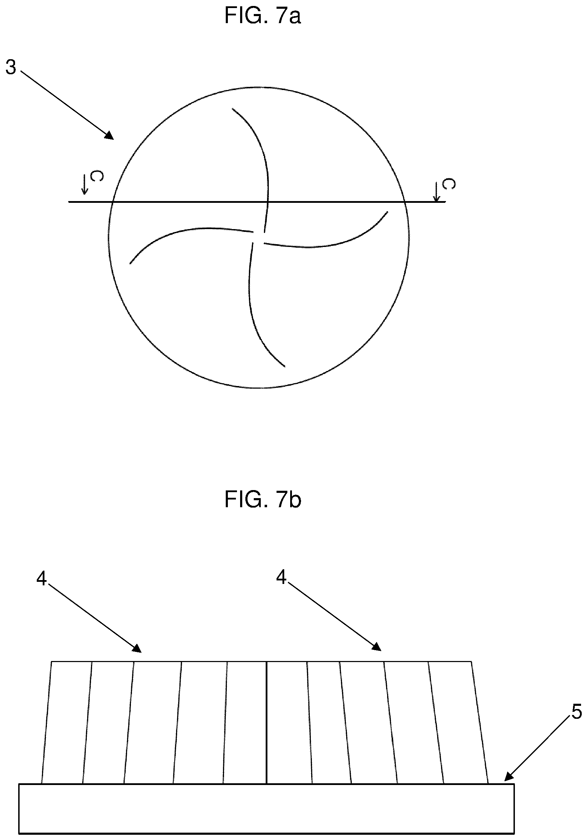

Preferably, as illustrated in figure 7b, at least a part of the bristles 4 are inclined towards the inside of the support surface 5.

In the preferred embodiment, some rows of bristles 4 have this radial inclination, whereas the remaining rows have an inclination substantially parallel to the normal direction. The latter have the task of spreading the sauce uniformly.

According to the present invention the spreading apparatus 1 comprises an arm 6 movable towards/away from the conveyor 2. The arm 6 is movable according to a substantially parallel direction to an advancement direction of the conveyor 2 so as to follow a food product along it for a predefined portion of a path.

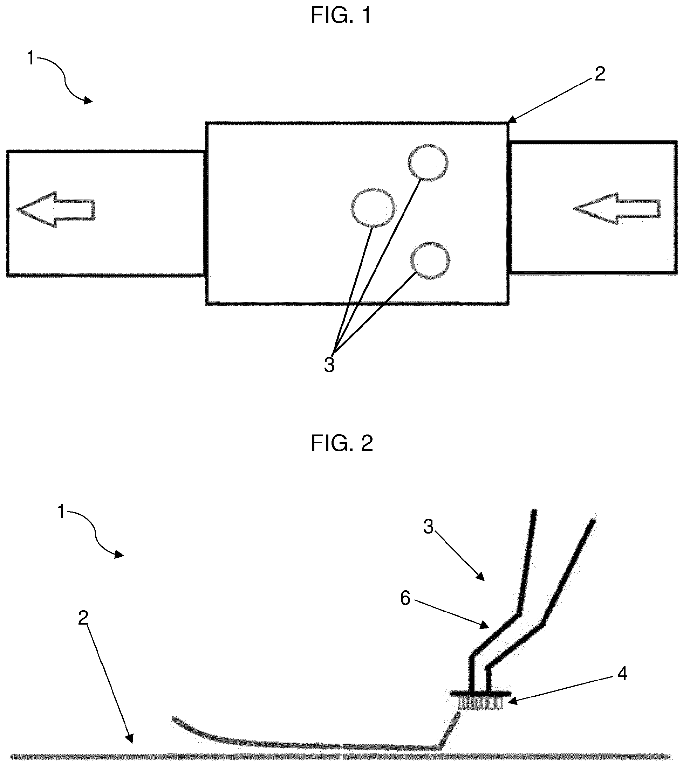

By way of example, the portion of path in which the arm 6 follows the food product has a length comprised between 200 and 300 millimetres. An example of portion of path is illustrated in figure 2.

According to the present invention, the spreading head 3 is arranged at an end of the arm 6.

According to one embodiment, the spreading head 3 comprises a support and a polyethylene disc into which the bunches of nylon bristles 4 are inserted. The disc is mounted onto the support by threaded connection means, in particular four screws. In turn, the support is mounted on the arm 6 by means of a spring-loaded pin. This enables quick assembly/disassembly of the spreading head 3 from the arm 6.

According to an alternative embodiment, not illustrated, the spreading head 3 comprises a plurality of brushes arranged radially or in a spoke arrangement. The row of bristles 4 is represented by a brush.

According to the present invention, the arm 6 is an anthropomorphous robot provided with 6 controlled axes.

Preferably, the arm 6 is provided with a rotatable wrist so that, in combination with the rotation of the spreading head 3, an eccentric rotation movement is created which is useful in the case of larger food products with respect to standard or reduced quantities of sauce.

According to the present invention the food products are supplied to the conveyor 2 in a plurality of rows. The spreading apparatus 1 comprises a spreading head 3 and therefore an arm 6 for every row of food products. In the preferred embodiment, there are three rows of food products.

A pizza production line, according to the present invention, is indicated by number 10 and is described below.

The production line 10 comprises a spreading apparatus 1 for spreading sauce according to what is described above. A cooking station 11 for cooking a plurality of doughs is arranged upstream of the spreading apparatus 1. For example, the cooking station is an oven.

The production line 10 comprises a dosing station 12 for dosing a sauce on the cooked doughs interposed between the cooking station 11 and the spreading apparatus 1.

A method for spreading sauce onto food products, according to the present invention, is described below. Such method is advantageously implemented by a spreading apparatus 1 as described above.

The method for spreading sauce comprises the step of dosing a portion of sauce onto each of the food products.

Once a portion of sauce has been dosed onto each of the food products, the method comprises the step of spreading each portion of sauce. Such step takes place by means of a spreading head comprising a support surface and at least a row of bristles having an extension between a central portion and a perimeter portion of said support surface. Appropriately, the bristles drag the sauce spreading it onto the food product.

Preferably, the method comprises a step of cooking the food products before the step of dosing a portion of sauce onto each of the food products.

The characteristics of the apparatus and method for spreading sauce on food products and of the pizza production line, according to the present invention, are clear, as are the advantages.

In particular, the arrangement of the bristles in rows described was devised in order to obtain quick and at the same time uniform spreading, as similar as possible to the result obtained manually. The inclination of the rows of bristles contributes to obtaining the desired spreading and to minimising the dripping of sauce outside the pizza in the return movement between one spreading and the next one.

## Claims

1. A pizza production line (10), comprising:
i) a cooking station (11) for cooking a plurality of doughs;
ii) a dosing station (12) for dosing a sauce on the cooked doughs arranged downstream of the cooking station (11);
iii) a spreading apparatus (1) for spreading sauce downstream of the dosing station (12); the spreading apparatus (1) for spreading sauce on food products, comprising:
- a conveyor (2) of a plurality of food products on which the sauce is placed; the food products are supplied to the conveyor (2) in a plurality of rows;
- at least one spreading head (3) acting on said conveyor (2) in such a way as to spread the sauce;
- an arm (6) movable towards/away from the conveyor (2);
wherein the arm (6) is movable according to a substantially parallel direction to an advancement direction of the conveyor (2) so as to follow a food product along it for a predefined portion of a path; said at least one spreading head (3) being arranged at an end of the arm (6); the arm (6) being a robot provided with 6 controlled axes; the spreading apparatus (1) comprising said at least one spreading head (3) and therefore the arm (6) for every row of food products;
said at least one spreading head (3) comprising a plurality of bristles (4) and a support surface (5) destined to face the conveyor (2), said bristles (4) originating from said support surface (5) moving away therefrom.

2. The line according to claim 1, wherein the bristles (4) are arranged in at least one row, said at least one row of bristles (4) having an extension between a central portion and a perimeter portion of said support surface (5).

3. The line according to claim 2, wherein the extension of said at least one row of bristles (4) defines a course that is at least partly curvilinear.

4. The line according to claim 3, wherein said at least one row of bristles (4) has an extension along said support surface (5) according to a course defining a concavity.

5. The line according to any one of the preceding claims, wherein the bristles (4) are arranged in a plurality of converging rows at a common central portion of said support surface (5).

6. The line according to claim 5, wherein the rows of bristles (4) extend in pairs; each of said pairs comprising two flanked rows, the rows of each pair extending along two flanked trajectories.

7. The line according to any one of the preceding claims, wherein the bristles (4) are inclined in a tangential direction with respect to a normal direction to the support surface (5).

8. The line according to any one of the preceding claims, wherein at least a part of the bristles (4) has a moving-away extension from the support surface (5) which moving-away extension is inclined towards the outside of the support surface (5).

9. The line according to any one of the preceding claims, wherein said at least one spreading head (3) rotates about an axis of rotation.

10. The line according to claim 1, wherein the arm (6) is provided with a rotatable wrist so that, in combination with the rotation of said at least one spreading head (3), an eccentric rotation movement is created which is useful in the case of larger food products with respect to standard or reduced quantities of sauce.

11. A method for spreading sauce on food products using a pizza production line according to any claim from 1 to 10 and comprising steps of:
- dosing a portion of sauce on each of the food products;
- cooking said food products, the step of cooking said food products preceding the step of dosing a portion of sauce on each of the food products;
- once a portion of sauce has been dosed onto each of the food products, spreading the portion of sauce on each of the food products,
said step of spreading the portion of sauce taking place by means of at least one spreading head (3) comprising a support surface (5) and at least a row of bristles (4) having an extension between a central portion and a perimeter portion of said support surface (5).

## Patentansprüche

1. Pizzaherstellungslinie (10), umfassend:
i) eine Garstation (11) zum Garen einer Vielzahl von Teigen;
ii) eine Dosierstation (12) zum Dosieren einer Sauce auf die gegarten Teige, die stromabwärts der Garstation (11) angeordnet ist;
iii) eine Verteilvorrichtung (1) zum Verteilen von Sauce stromabwärts der Dosierstation (12); wobei die Verteilvorrichtung (1) zum Verteilen von Sauce auf Lebensmittelprodukten Folgendes umfasst:
- einen Förderer (2) für eine Vielzahl von Lebensmittelprodukten, auf denen die Sauce aufgetragen wird; die Lebensmittelprodukte werden dem Förderer (2) in einer Vielzahl von Reihen zugeführt;
- mindestens einen Verteilkopf (3), der auf den Förderer (2) einwirkt, um die Sauce zu verteilen;
- einen Arm (6), der zum Förderer (2) hin und von diesem weg beweglich ist;
wobei der Arm (6) in einer im Wesentlichen parallelen Richtung zur Vorschubrichtung des Förderers (2) beweglich ist, um einem Lebensmittelprodukt entlang diesem über einen vordefinierten Abschnitt einer Bahn zu folgen;
wobei der mindestens eine Verteilkopf (3) an einem Ende des Arms (6) angeordnet ist; wobei der Arm (6) ein Roboter mit 6 gesteuerten Achsen ist; wobei die Verteilvorrichtung (1) den mindestens einen Verteilkopf (3) und somit den Arm (6) für jede Reihe von Lebensmittelprodukten umfasst;
wobei der mindestens eine Verteilkopf (3) eine Vielzahl von Borsten (4) und eine Stützoberfläche (5) umfasst, die dem Förderer (2) zugewandt ist, wobei die Borsten (4) von der Stützoberfläche (5) ausgehen und sich von dieser wegbewegen.

2. Linie nach Anspruch 1, wobei die Borsten (4) in mindestens einer Reihe angeordnet sind, wobei sich die mindestens eine Reihe von Borsten (4) zwischen einem mittleren Abschnitt und einem Umfangsabschnitt der Stützoberfläche (5) erstreckt.

3. Linie nach Anspruch 2, wobei die Erstreckung der mindestens einen Reihe von Borsten (4) einen Verlauf definiert, der zumindest teilweise gekrümmt ist.

4. Linie nach Anspruch 3, wobei sich die mindestens eine Reihe von Borsten (4) entlang der Stützoberfläche (5) nach einem Verlauf erstreckt, der eine Wölbung definiert.

5. Linie nach einem der vorhergehenden Ansprüche, wobei die Borsten (4) in einer Vielzahl von konvergierenden Reihen an einem gemeinsamen mittleren Abschnitt der Stützoberfläche (5) angeordnet sind.

6. Linie nach Anspruch 5, wobei sich die Reihen von Borsten (4) paarweise erstrecken; wobei jedes der Paare zwei nebeneinanderliegende Reihen umfasst, wobei sich die Reihen jedes Paares entlang zwei nebeneinanderliegenden Bewegungsbahnen erstrecken.

7. Linie nach einem der vorhergehenden Ansprüche, wobei die Borsten (4) in Bezug auf eine normale Richtung zur Stützoberfläche (5) in einer Tangentialrichtung geneigt sind.

8. Linie nach einem der vorhergehenden Ansprüche, wobei mindestens ein Teil der Borsten (4) eine von der Stützoberfläche (5) wegweisende Erstreckung aufweist, wobei die wegweisende Erstreckung zur Außenseite der Stützoberfläche (5) hin geneigt ist.

9. Linie nach einem der vorhergehenden Ansprüche, wobei sich der mindestens eine Verteilkopf (3) um eine Rotationsachse dreht.

10. Linie nach Anspruch 1, wobei der Arm (6) mit einem drehbaren Gelenk versehen ist, so dass in Kombination mit der Drehung des mindestens einen Verteilkopfes (3) eine exzentrische Drehbewegung erzeugt wird, die bei größeren Lebensmittelprodukten in Bezug auf Standard- oder reduzierte Saucemengen nützlich ist.

11. Verfahren zum Verteilen von Sauce auf Lebensmittelprodukten unter Verwendung einer Pizzaherstellungslinie nach einem der Ansprüche 1 bis 10 und umfassend die folgenden Schritte:
- Dosieren einer Portion Sauce auf jedes der Lebensmittelprodukte;
- Garen der Lebensmittelprodukte, wobei der Schritt zum Garen der Lebensmittelprodukte dem Schritt zum Dosieren einer Portion Sauce auf jedes der Lebensmittelprodukte vorhergeht;
- nachdem eine Portion Sauce auf jedes der Lebensmittelprodukte dosiert wurde, Verteilen der Portion Sauce auf jedem der Lebensmittelprodukte,
wobei der Schritt zum Verteilen der Portion Sauce mittels mindestens eines Verteilkopfes (3) erfolgt, umfassend eine Stützoberfläche (5) und mindestens eine Reihe von Borsten (4), die sich zwischen einem mittleren Abschnitt und einem Umfangsabschnitt der Stützoberfläche (5) erstrecken.

## Revendications

1. Ligne de production de pizza (10), comprenant :
i) un poste de cuisson (11) servant à cuire une pluralité de pâtes ;
ii) un poste de dosage (12) servant à doser une sauce sur les pâtes cuites, disposé en aval du poste de cuisson (11) ;
iii) un appareil d'étalement (1) servant à étaler la sauce en aval du poste de dosage (12); l'appareil d'étalement (1) servant à étaler la sauce sur des produits alimentaires comprenant:
- un transporteur (2) d'une pluralité de produits alimentaires sur lesquels la sauce est placée; les produits alimentaires sont fournis au transporteur (2) en une pluralité de rangées;
- au moins une tête d'étalement (3) agissant sur ledit transporteur (2) de manière à étaler la sauce;
- un bras (6) pouvant se rapprocher/s'éloigner du transporteur (2);
dans laquelle le bras (6) est mobile selon une direction sensiblement parallèle à une direction d'avancement du transporteur (2) de manière à suivre un produit alimentaire le long de celui-ci sur une partie prédéfinie d'un trajet;
ladite au moins une tête d'étalement (3) étant disposée à une extrémité du bras (6); le bras (6) étant un robot pourvu de 6 axes à commande; l'appareil d'étalement (1) comprenant ladite au moins une tête d'étalement (3) et donc le bras (6) pour chaque rangée de produits alimentaires;
ladite au moins une tête d'étalement (3) comprenant une pluralité de brosses (4) et une surface de support (5) destinée à faire face au transporteur (2), lesdites brosses (4) provenant de ladite surface de support (5) s'en éloignant.

2. Ligne selon la revendication 1, dans laquelle les brosses (4) sont disposées en au moins une rangée, ladite au moins une rangée de brosses (4) s'étendant entre une partie centrale et une partie périphérique de ladite surface de support (5).

3. Ligne selon la revendication 2, dans laquelle l'extension de ladite au moins une rangée de brosses (4) définit un parcours qui est au moins partiellement curviligne.

4. Ligne selon la revendication 3, dans laquelle ladite au moins une rangée de brosses (4) s'étend le long de ladite surface de support (5) selon un parcours définissant une concavité.

5. Ligne selon l'une quelconque des revendications précédentes, dans laquelle les brosses (4) sont disposées en une pluralité de rangées convergentes au niveau d'une partie centrale commune de ladite surface de support (5).

6. Ligne selon la revendication 5, dans laquelle les rangées de brosses (4) s'étendent par paires; chacune desdites paires comprenant deux rangées flanquées, les rangées de chaque paire s'étendant le long de deux trajectoires flanquées.

7. Ligne selon l'une quelconque des revendications précédentes, dans laquelle les brosses (4) sont inclinées dans une direction tangentielle par rapport à une direction normale à la surface de support (5).

8. Ligne selon l'une quelconque des revendications précédentes, dans laquelle au moins une partie des brosses (4) présente une extension s'éloignant de la surface de support (5), ladite extension qui s'éloigne étant inclinée vers l'extérieur de la surface de support (5).

9. Ligne selon l'une quelconque des revendications précédentes, dans laquelle ladite au moins une tête d'étalement (3) pivote autour d'un axe de rotation.

10. Ligne selon la revendication 1, dans laquelle le bras (6) est pourvu d'un poignet rotatif de sorte que, en combinaison avec la rotation de ladite au moins une tête d'étalement (3), un mouvement de rotation excentrique est créé, ce qui est utile dans le cas de produits alimentaires plus volumineux par rapport à des quantités standard ou réduites de sauce.

11. Procédé d'étalement de sauce sur des produits alimentaires à l'aide d'une ligne de production de pizza selon l'une quelconque des revendications 1 à 10 et comprenant les étapes suivantes:
- doser une quantité de sauce sur chacun des produits alimentaires;
- cuire lesdits produits alimentaires, l'étape consistant à cuire lesdits produits alimentaires précédant l'étape consistant à doser une quantité de sauce sur chacun des produits alimentaires;
- une fois qu'une quantité de sauce a été dosée sur chacun des produits alimentaires, étaler la quantité de sauce sur chacun des produits alimentaires,
ladite étape consistant à étaler la quantité de sauce s'effectuant au moyen d'au moins une tête d'étalement (3) comprenant une surface de support (5) et au moins une rangée de brosses (4) s'étendant entre une partie centrale et une partie périphérique de ladite surface de support (5).
